Europäisches Patentamt

**European Patent Office**

**Office européen des brevets**

(19)

(11) Publication number: **0 111 425**
**A2**

# (12) EUROPEAN PATENT APPLICATION

(21) Application number: **83307455.2**

(22) Date of filing: **07.12.83**

(51) Int. Cl.³: **B 60 J 7/10**

(30) Priority: **08.12.82 GB 8234974**
**08.03.83 GB 8306292**

(43) Date of publication of application:
**20.06.84 Bulletin 84/25**

(84) Designated Contracting States:
**AT BE DE FR IT NL SE**

(71) Applicant: **Idex (Jersey) Limited**
**10 Royal Square**
**St-Helier Jersey Channel Islands(GB)**

(72) Inventor: **Bartmann, Nicholas**
**32 Risborough Road Stoke Manderville**
**Aylesbury Buckinghamshire(GB)**

(72) Inventor: **Frampton, Jeffery Alan**
**107 Route du Nant d'Avril**
**1217 Meyrin Geneva(CH)**

(74) Representative: **Clifford, Frederick Alan et al,**
**MARKS & CLERK 57/60 Lincoln's Inn Fields**
**London WC2A 3LS(GB)**

(54) Hinge assembly.

(57) A hinge assembly 3 for a sunroof panel 4 is located with its effective transverse pivot axis W only slightly rearward of the vertical plane containing the front edge 4a of the panel 4, so as to minimise compressive wear on the elastomer panel seal 10 when the panel 4 is opened. For example, a metal channel 15 secured to the flap has a rounded forward edge 35 fitting in a groove 12, and held thereby by elasticity of seal 10, optionally plus channel elasticity. A protective cowl 13 can protect this arrangement, and is capable of being pulled back around pivot Y by a finger pull in space S against over-centre mounting X-Y-Z. Such control movement also affects the securing of channel 15 to the pane 4, whereby channel 15 falls downwards to free the pivot 35/12 and thus allow the hinge assembly to be removed.

FIG.1.

EP 0 111 425 A2

Title:"Hinge Assembly"

This invention relates to a hinge assembly, and more particularly to a hinge assembly suitable for pivoting at or near one edge a flap lying effectively flush with a surrounding surface. The invention is of particular applicability to a hinge assembly used on a vehicle sunroof.

In a preferred form the invention relates to such a hinge assembly which is readily demountable for maintenance or replacement.

Although this invention has general applicability to a hinge for any pivoted flap more or less plane with its surround, it will be generally described in relation to a vehicle sunroof of the tilting type. In such sunroofs the flap is a pane of toughened glass and lies more or less flush with or slightly above the roof panel of the vehicle. Such a pane is tilted up at the rear edge about a transverse pivot axis in the vicinity of the front edge. Because of its positionsuch a sunroof has to be adequately sealed into a surround fitted in the roof panel of the vehicle. Typical seals are made of a tubular elastomeric member which flexes as the flap moves.

A problem of such flaps which we have observed is that the seal at the front edge of the sunroof becomes unduly worn in use. This is because conventionally the effective pivot axis is spaced to some distance back from the front edge of the glass. If, for example, it is spaced so as to lie rearwardly one tenth of the distance from the front edge towards the back edge of the glass, an effective opening at the rear edge of say fifteen centimetres will lead to the forward edge being lowered by 1.5 centimetres. This amount of movement upon a rubber seal in a position exposed to weather is undesirable, and can lead to failure of the seal. Attempts to overcome this problem have included roof mountings, in which the hinges are above the roof panel, but these attempts are unattractive and have led to different disadvantages such as rust, corrosion or accumulation of dirt. A third type of fixture, the so-called "bayonet" fixture using arcuate struts gives rise to wind noise when opened.

In one aspect the present invention sets out to provide a suitable hinge assembly, the effective transverse pivot axis of which is only slightly rearward of the vertical plane containing the front edge of the flap, and is preferably ahead of the vertical plane containing the point of attachment of the hinge assembly to the flap.

A preferred form of the invention uses such an assembly to deal with another problem observable in sunroofs. If the hinge mechanism is inside of the vehicle it provides moving and working parts at a undesirable location, i.e. just above the head of the driver and/or passenger. There is thus the risk of injury, or at least damage or marking, from the moving parts, especially when the sunroof is raised and these parts are in a more prominent position. In another aspect, the invention therefore provides a forward-positioned hinged structure as discussed above with a protective cowl. This cowl itself can be movable, so as to facilitate demounting of the hinge for service or replacement.

In one aspect the invention provides a hinge structure, for a vehicle sunroof or the like, in which a rounded transverse member fixed in relation to the sunroof flap or pane of glass is received in a downwardly open transverse groove or like configuration to constitute a transverse pivot axis located in a vertical plane at or near the vertical plane of the edge of the glass.

The converse arrangement, in which the grooved member is fixed in relation to the flap or pane of glass, is also within the scope of the invention. Moreover, other types of transverse axis at or near the forward edge of the glass or the like can be utilised.

4

In another aspect the invention consists in a hinge structure, for a vehicle sunroof or the like, of the type in which a forward edge of the flap or pane of glass rests upon a deformable seal extending transversely of the vehicle, in which a forwardly open generally rigid channel-shaped frame is secured to extend transversely beneath the glass or like flap near a forward edge thereof, a lower wall of the channel-shaped frame having a rounded configuration whereby it is adapted to be received into a transverse groove of like configuration to a static vehicle component beneath the seal so that the rubber seal is clamped between the glass and the static vehicle component and the effective transverse pivot axis defined at the rounded edge is located in a vertical plane at or near the vertical plane of the edge of the glass.

The frame member may be made of polymer or metal and advantageously is itself of a spring or clamping construction. Spring steel or heavy-duty polymer moulding, e.g. of neutral opening dimension rather less that the assembled opening dimension, is preferred. A positive clamping action is exerted by such a spring member, in addition to the clamping action produced by deformation of the rubber seal. In this way, even after prolonged use (when the resilience of the rubber may decrease and the rubber becomes permanently deformed)

4

there is a positive axis at the front edge of the sunroof, which can however still be overcome by a strong disassembling pull in accordance without main invention.

By "static vehicle component" we mean a vehicle roof structure, or more usually a sunroof surround frame, which does not alter its position relative to the remainer of the vehicle. Preferably, the effective transverse axis is located between the vertical plane of the edge of the flap or glass and the vertical plane containing the point of attachment of the channel to the flap or glass.

Thus, in the invention as defined above, the necessary connection between the flap or glass pane and the static vehicle component is effected by squeezing the rubber seal between the edge of the glass and the underlying vehicle component. The rounded hinging edge extends as a transverse pivot axis which lies within the vehicle, below the flap or glass and in a forward position at or near the vertical plane of the front edge of the flap or glass so as to minimise deformation of the seal upon tiling of the flap or glass.

Preferably, the moving portions so defined are covered by a protective cowl, for example of a rounded configuration. This cowl itself may be capable of relative movement.

6

In a particularly preferred embodiment, the cowl member has side walls, extending longitudinally in relation to the vehicle, and defining on their inner surfaces bearing means; and a clamping yoke is supported in the bearing means and capable of pressing the channel-shaped frame into immobilised engagement with respect to the flap or pane of glass, the yoke being capable of a pivoting movement in the bearing means so that it becomes removed from its engaged position and the channel-shaped frame consequently tilts to disengage the rounded forward edge from the transverse groove in the static vehicle component.

In a preferred form the bearing means are shaped as elliptical recesses at the inner surface of each yoke side wall, and circular bearing members project one from either side of the yoke to be mounted in such recesses. In such a case the yoke positions may force the circular bearing members (a) to uppermost positions in their respective elliptical recesses at which the centre of the bearing member is above a line joining (i) a transverse pivot axis between the yoke and a securing member to the flap or pane and (ii) the pivot point of the cowl relative to the flap or pane or (b) to lowermost positions in which the said centre is at the other side of the said line.

The invention will be further described with reference to the accompanying drawings, in which:

Figure 1 is a longitudinal section through a demountable hinge according to the invention in use on a vehicle sunroof,

Figure 2 is a simplified diagrammatic section showing parts of Figure 1 in their relative positions as the hinge is de-mounted,

Figure 3 shows in exploded perspective part of Figures 1 and 2, and

Figure 4 shows a different design of hinge in exploded view, also permitting pivoting near the front edge.

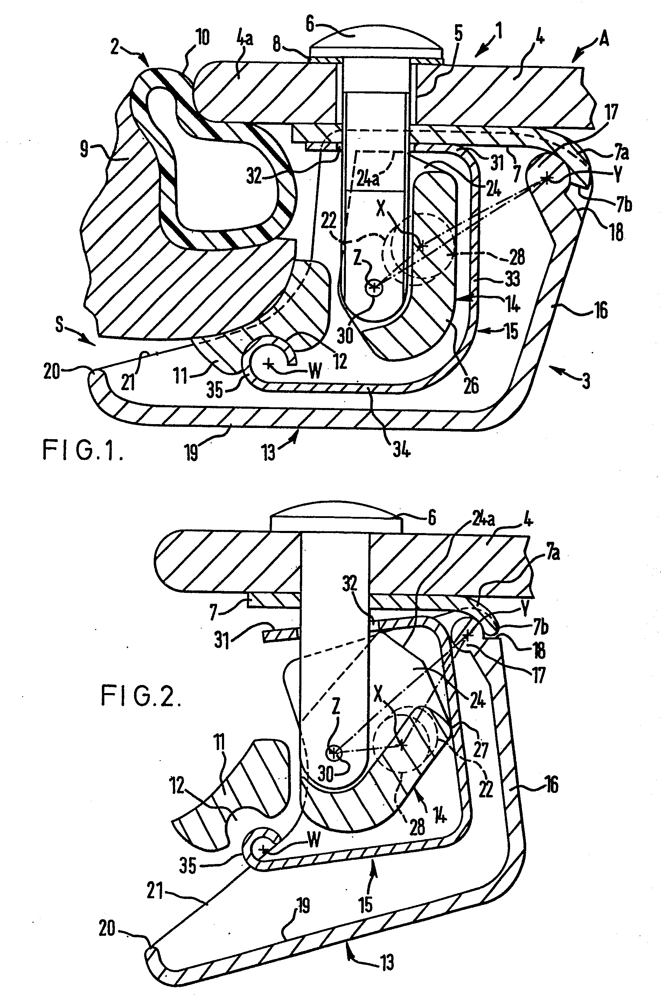

The assembly shown in the Figures 1 and 2 comprises a sunroof portion 1, a static vehicle component in the form of a surround 2, and a hinge structure 3 which in addition to permitting the sunroof to pivot upwards can also be readily de-mounted to remove the sunroof.

The sunroof portion 1 comprises a pane of toughened glass 4 apertured at 5. A metal or polymer flap can also be used and references to "pane of glass" herein should be read accordingly. A bolt 6 of specialised form described below, passes freely through the aperture but in threaded connection with steel plate 7, and packing 8 is located beteen the head of the bolt and the upper surface of the glass. Thus the glass 4 is attached to the steel plate 7.

The surround 2 comprises a transverse structural member 9 supporting a tubular rubber seal 10 immediately beneath the front edge 4a of the glass. Beneath the structural member 9, (which can be of any convenient shape and point of attachment to the vehicle roof) is located a strip 11, suitably of synthetic polymer, with a groove 12, part-circular in cross-section, along its lower surface i.e. extending transversely in relation to the vehicle.

The hinge structure 3 is shown in a longitudinal section including one bolt. Usually there are two bolts, spaced transversely, in each hinge, and preferably there are two such hinges for each sunroof. Each hinge structure 3 comprises a cowl or housing 13, a transverse yoke and a pivot-carrying frame 15.

The cowl 13 is an integral structure of polymeric material. It possesses a rear wall 16 with a rounded upper edge 17 lodged in a curved rear edge configuration 7a of steel plate 7, and possessing an abutment surface 18 near this upper edge 17. It further possesses base 19 with rounded finger-grip edge 20, and moreover side walls 21 on the inner opposed faces of which are formed two elliptical bearing recesses 22.

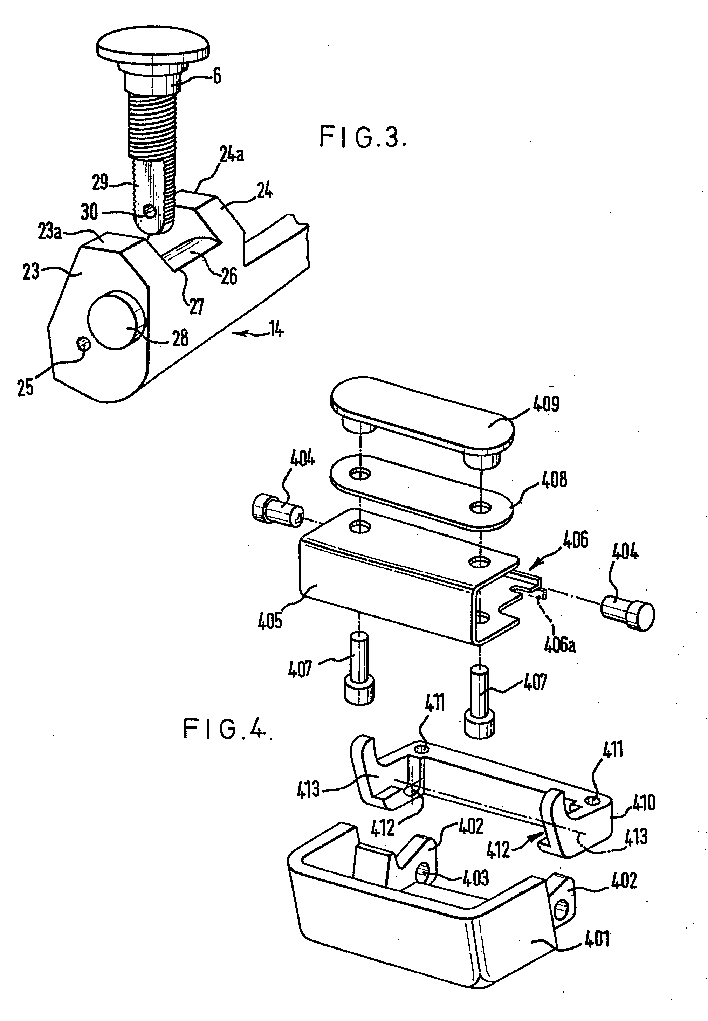

Transverse yoke 14 is also shown in Figure 3. For each bolt position the yoke 14 possesses two parallel walls 23 and 24 with aligned apertures 25 towards their lower ends. A rear yoke wall 26 possesses an obtuse corner region 27. Walls 23 and 24 have upper clamping surfaces 23a and 24a respectively. The outer face of wall 23 and its opposite counterpart wall at the other end of the yoke (not shown) are formed to provide short large diameter bearing member 28. Figure 3 also shows the nature of bolt 6, which has a conventional threaded configuration where it needs to engage the plate 7 but a cut-away flat lower half 29 containing a through hole 30.

Pivot-carrying frame 15 is preferably of metal. It has a flat topl 31 with an oversixe hole 32 surrounding bolt 6. It also possesses rear wall 33 and bottom wall 34, the front edge of which is rounded at 35 to provide an almost completely circular cross-section of a size to sit in groove 12 of strip 11.

Assembly is effected by turning bolt 6 in steel plate 7 until the glass 4 is gripped between plate 7 and resilient packing 8. The dimensions are predetermined so that bolt 6 then extends the requisite distance beneath the steel plate. The resilience of the packing 8 allows the bolt 6 to be adjusted so that through hole 30 aligns

10

with apertures 25. At this stage, a shaft is passed through aligned apertures 25 and yoke 14 is thus connected to the bolt and is able to clamp, at surfaces 23a and 24a, the underside of the top 31 of frame is immobilised against the plate 7. The rounded front pivot edge 35 of the frame lodges firmly in groove 12. Simultaneously, bearing members 28 at each end of the yoke slide up the elliptical bearing recesses 22 in the inner faces of cowl side walls 21 to a position where the joint centre of rotation X is above a line joining the pivot axis Z (at 25, 30) and the axis Y at the rounded upper edge 17 of cowl rear wall 16 which is lodged in curved rear edge configuration 7a of plate 7. This "over-centre" effect holds the cowl in a closed protective position over the moving parts.

Use of the hinge involves pivoting around the axis W, formed by edge 35 turning in groove 12. The vertical plane containing axis W lies just rearward of the vertical plane containing the edge 4a of the glass, and forward of the vertical plane of the axes of the bolts. This forward and underneath location of the sunroof pivot axis is advantageous over the prior art. One form of prior art involves hinges above the glass surface, with consequent risk or rust, damage and dirt. Another prior art stucture involves the effective hinge point being too far rearward of the edge 4a (e.g. at about point A) whereby edge 4a moves excessively when the roof

10

open and gives only a short operating life to the seal 10. The present invention gives a pivot location well forward in relation to the sunroof so as to minimise the wear on the seal. Moreover, in its improved form shown in the drawings, the hinge is safely mounted inside the car (i.e. with all moving parts covered in normal use) but is readily demountable for complete ventilation or for servicing or replacement if necessary.

De-mounting and removing the hinge is best described with reference to Figure 2. The operator places his finger in space S and pulls down hard on edge 20. The resilience in the structure (e.g. at 8 or inherent in the polymer components) allows the cowl to turn around pivot axis Y, the operator thus overcoming the "over-centre" resistance of axis X and pulling this axis into a new relationship, shown in Figure 2, under the line Y-Z with the bearing members 28 in the lower ends of bearing recesses 22 and with cowl abutment surface 18 against rear plate edge 7b. This pulls yoke 14 backwards, so that its surfaces 23a and 24a no longer clamp frame 15. However, hole 32 is oversized in relation to bolt 6. Frame 15 therefore falls downwards and edge 35 falls out of groove 12 to enable removal of the whole hinge structure and associated pane of glass. Mounting the assembled sunroof/hinge preassembly can of course take place in the reverse order.

Figure 4 shows a simplified design, which illustrates an alternative embodiment of the "forward pivoting" aspect of the invention, prior to assembly.

A moulded polymer outer casing 401 has forwardly extendingly lugs 402 with aligned apertures 403. Polymer pins 404 pass one through each aperture. Spring steel channel 405 pivots at its forward edge 406 around these pins, being turned over as at 406a for this purpose. This channel normally lies inside casing 401, facing forward. Fixing bolts 407 pass through the channel, through attachment plate 408 and through corresponding holes in a glass pane (not shown) to terminate inend yoke 409, this fixing being achieved by tilting casing 401 forward away from channel 405 prior to assembly.

Attachment to the surround frame of the roof (not shown) is achieved by stationary crosspiece 410, fixed at bores 411 by suitable screws (not shown). The pins 404, at their projecting heads, ride in arcuate recesses 412 of backwardly and upwardly extending crosspiece arms 413, thus giving a forward pivot axis. Spring steel channel 405 grips the elastomer seal on the surround ina positive fashion.

CLAIMS

1. A hinge structure for a motor vehicle sunroof, the effective transverse pivot axis of which is only slightly rearward of the vertical plane containing the front edge of the flap but is ahead of the vertical plane containing the point of attachment of the hinge assembly to the flap.

2. A hinge structure for a motor vehicle sunroof of the type including a front pivoting panel member seating on a peripherally surrounding elastomeric seal, as claimed in claim 1, comprising:
a forwardly open horizontal channel-shaped member, attachable at an upper face thereof essentially immovably in relation to the panel member to extend beneath the elastomeric seal,
means including at least one open arcuate groove defining a forward pivoting axis to the pane,
at least one rounded member to ride in said at least one groove, as the forward pivot,
said forward pivoting axis thereby defined being lcoated at or near the forward edge of the lower wall of the said channel and thereby being lcated at least approximately in the vertical plane of the forward edge of the panel.

3. A hinge structure as claimed in claim 2 in which the

14

channel is a resilient metal channel to exert a gripping
pressure on the elastomeric seal.

4. A hinge structure, for a vehicle sunroof or the like,
in which a rounded transverse member fixed in relation
to the sunroof flap or pane of glass is received in a
downwardly open transverse groove of like configuration
to constitute a transverse pivot axis located in a
vertical plane at or near the vertical plane of the edge
of the glass.

5. A hinge structure as claimed in claim 4 in which a
hinge structure, for a vehicle sunroof or the like, of
the type in which a forward edge of the flap or pane of
glass rests upon a deformable seal extending
transversely of the vehicle, in which a forwardly open
generally rigid channel-shaped frame is secured to
extend transversely beneath the glass or like flap near
a forward edge thereof, a lower wall of the
channel-shaped frame having a rounded configuration
whereby it is adapted to be received into a transverse
groove of like configuration to a static vehicle
component beneath the seal so that the rubber seal is
clamped between the glass and the static vehicle
component and the effective transverse pivot axis
defined at the rounded edge is located in a vertical
plane at or near the vertical plane of the edge of the
glass.

14

6. A hinge structure as defined in claim 5 further comprising a protective covering cowl.

7. A hinge structure as claimed in claim 6 in which the cowl member has side walls, extending longitudinally in relation to the vehicle, and defining on their inner surfaces bearing means; and a clamping yoke is supported in the bearing means and capable of pressing the channel-shaped frame into immobilised engagement with respect to the flap or pane of glass, the yoke being capable of a pivoting movement in the bearing means so that it becomes removed from its engaged position and the channel-shaped frame consequently tilts to disengage the rounded forward edge from the transverse groove in the static vehicle component.

8. A hinge structure as claimed in claim 7 in which the bearing means are shaped as elliptical recesses at the inner surface of each yoke side wall, and circular bearing members project one from either side of the yoke to be mounted in such recesses.

9. A hinge structure as claimed in claim 8 in which one yoke position is such as to force the circular bearing members (a) to uppermost positions in their respective elliptical recesses at which the centre of the bearing member is above a line joining (i) a transverse pivot axis between the yoke and a securing member to the flap or plane and (ii) the pivot point of the cowl relative to the flap or pane or (b) to lowermost positions in which the said centre is at the other side of the said line

FIG.1.

FIG.2.

FIG.3.

FIG.4.